Europäisches Patentamt

European Patent Office

Office européen des brevets

(19)

(11) Numéro de publication: **0 242 915 B1**

(12) **FASCICULE DE BREVET EUROPEEN**

(45) Date de publication de fascicule du brevet:
20.03.91

(51) Int. Cl.⁵: **H04L 7/033**

(21) Numéro de dépôt: 87200688.7

(22) Date de dépôt: 13.04.87

(54) Dispositif pour la récupération de rythme convenant notamment pour un système de transmission d'informations utilisant dans un sens de transmission le principe dit d'A.M.R.T.

(30) Priorité: 22.04.86 FR 8605785

(43) Date de publication de la demande:
28.10.87 Bulletin 87/44

(45) Mention de la délivrance du brevet:
20.03.91 Bulletin 91/12

(84) Etats contractants désignés:
DE FR GB IT SE

(56) Documents cités:
EP-A- 0 006 988
EP-A- 0 138 434
DE-A- 2 020 169
US-A- 3 983 498
US-A- 4 280 099

L'ONDE ELECTRIQUE, vol. 63, no. 8/9, août-septembre 1983, pages 23-29, Paris, FR; H. BADOUAL et al.: "IRT 1500 - Système rural de raccordement d'abonnés par voie hertzienne"

COMMUNICATIONS PRESENTEES DU COLLOQUE INTERNATIONAL: L'ESPACE ET LA COMMUNICATION, 1971, pages 196-205, Pa-ris, FR; G. DAVID et al.: "13 C - Les synchronisations d'un multiplex temporel pour la gestion du trafic aérien"

(73) Titulaire: TELECOMMUNICATIONS RADIOELECTRIQUES ET TELEPHONIQUES T.R.T.
88, rue Brillat Savarin
F-75013 Paris(FR)DE GB IT SE

Titulaire: TRT TELECOMMUNICATIONS RADIOELECTRIQUES ET TELEPHONIQUES
88 rue Brillat Savarin
F-75013 Paris(FR)FR

(72) Inventeur: Balech, Jean-Pierre
SOCIETE CIVILE S.P.I.D. 209, rue de l'Université
F-75007 Paris(FR)

(74) Mandataire: Chaffraix, Jean et al
Société Civile S.P.I.D. 156, Boulevard Haussmann
F-75008 Paris(FR)

## Description

La présente invention concerne un dispositif pour la récupération de rythme convenant notamment pour un système de transmission d'informations utilisant dans un sens de transmission le principe dit d'Accès Multiple à Répartition dans le Temps (A.H.R.T.), système constitué d'une station centrale et de stations distantes, chaque station disposant d'au moins un circuit émetteur et un circuit récepteur, les informations transmises par le circuit émetteur de la station centrale vers les circuits récepteurs des stations distantes étant multiplexées temporellement et synchronisées au moyen d'une boucle à verrouillage de phase fournissant entre autres un signal d'horloge multiplex, alors que les informations émises par les circuits émetteurs des stations distantes sont transmises vers le circuit récepteur de la station centrale selon le principe dit d'A.M.R.T. et sont synchronisées par le dispositif de récupération de rythme qui comporte au moins un comparateur de phase, un diviseur de fréquence programmable, un oscillateur qui fournit un signal de référence au diviseur programmable. Un tel système de transmission dans lequel les informations sont multiplexées temporellement dans le sens station centrale vers stations distantes et sont transmises selon le principe dit d'A.M.R.T. dans l'autre sens est connu par exemple de "l'onde électrique, Vol. 63, no 8/9, 1983, pages 23-29; BADOUAL et al: "IRT 1500- système rural de raccordement d'abonnés par vai hertzienne".

De tels disposifs de récupération de rythme sont bien connus, notamment du dispositif décrit dans le brevet des Etats-Unis d'Amérique n° 3 983 498. Dans ce brevet le dispositif de récupération de rythme utilise le signal de sortie d'un oscillateur non asservi comme signal de référence, ce signal de sortie est divisé au moyen d'un diviseur programmable puis comparé à l'aide d'un comparateur de phase au signal véhiculant les informations binaires à une vitesse de 24kbit/s, la sortie du comparateur de phase étant rebouclée sur une entrée de commande du diviseur programmable pour modifier la division de celui-ci et ainsi tendre vers une synchronisation des informations d'entrée.

Un premier inconvénient d'un tel dispositif employant un oscillateur non asservi est qu'il subsiste à sa sortie une "gigue" résiduelle qui est inadmissible pour écouler efficacement et avec précision des informations et ce, à plus forte raison si la vitesse de transmission atteint quelques Mbit/s.

Un second inconvénient d'un tel dispositif est que le comparateur de phase dont la sortie n'est pas "lissée" fournit une quantification trop grossière au diviseur programmable pour obtenir une synchronisation rapide et précise.

La présente invention propose un dispositif du genre précité que ne présente pas les inconvénients du dispositif connu.

Pour cela le dispositif de récupération de rythme du genre mentionné dans le préambule est remarquable en ce qu'il est constitué par une double boucle pour une remise en phase rapide, la première boucle comportant l'oscillateur qui est asservi au signal d'horloge multiplex et fournissant à son tour le signal de référence à la deuxième boucle comportant entre autres le comparateur de phase et le diviseur programmable.

Le but de l'invention est d'obtenir une récupération de rythme efficace et rapide relativement au nombre d'octets affectés aux phases de synchronisation. Ce nombre doit être le plus bas possible comparativement au nombre total d'octets par trame. Simultanément, la récupération de rythme doit satisfaire à des exigences de précision et de réduction de gigue. L'idée de l'invention consiste à utiliser le signal d'horloge multiplex qui est stable et précis pour un calage efficace en fréquence de la double boucle à verrouillage de phase, cette double boucle ainsi asservie en fréquence opère alors une remise en phase rapide.

De même le dispositif de récupération de rythme selon l'invention est remarquable en ce que le diviseur programmable est précédé d'un filtre numérique séquentiel, ceci pour moyenner l'information d'entrée du diviseur programmable. Ainsi le dispositif de récupération de rythme est avantageusement et rapidement calé en fréquence et en phase avec précision.

De plus le dispositif de récupération de rythme est remarquable en ce que la fréquence du signal de référence fourni par l'oscillateur asservi est un multiple de la fréquence du signal d'horloge multiplex. La précision temporelle de la récupération de rythme est ainsi accrue du fait que l'asservissement de la double boucle sur le signal d'horloge multiplex se fait à fréquence élevée.

La description suivante en regard des dessins annexés, le tout donné à titre d'exemple, fera bien comprendre comment l'invention peut être réalisée.

La figure 1 montre de manière schématique un système de transmission d'informations dans lequel le dispositif de récupération de rythme selon l'invention est utilisé.

La figure 2 représente une boucle à verrouillage de phase utilisée dans le sens de transmission de la station centrale vers les stations distantes.

La figure 3 présente un dispositif de récupération de rythme selon l'invention.

La figure 4a montre un diagramme d'états relatif au comparateur de phase utilisé dans la deuxième boucle alors que la figure 4b montre un schéma simplifié dudit comparateur de phase.

La figure 5a montre un diagramme d'états relatif au filtre numérique séquentiel tandis que la figure 5b montre un schéma simplifié du filtre numérique séquentiel.

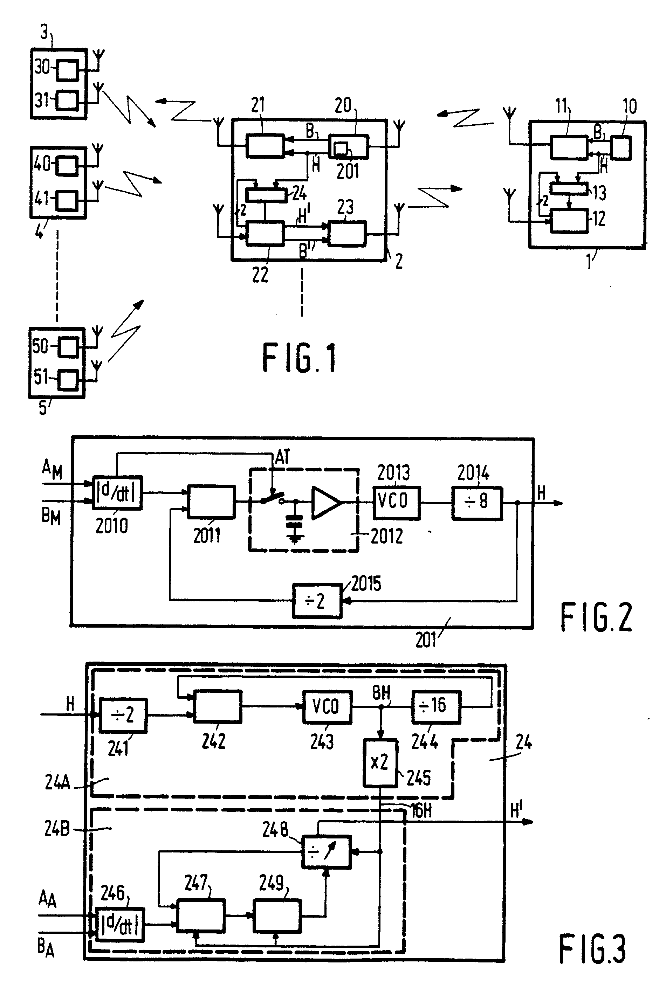

Sur la figure 1 est montré de manière schématique un système de transmission d'informations dans lequel est utilisé le dispositif de récupération de rythme selon l'invention. Le système représenté est un système hertzien du type point multipoint généralement utilisé dans les équipements de téléphonie rurale. Une seule station centrale 1 communique avec n stations distantes, telles que la station répétrice 2 et les stations terminales 3, 4, 5... Selon la configuration du système relative au nombre d'abonnés et à la zone à desservir, il peut y avoir une ou plusieurs stations répétrices ou il peut ne pas en exister du tout.

Les informations transitant par l'unité centrale 10 de la station centrale 1 sont fournies au modulateur du circuit émetteur 11 sous forme binaire B + horloge H, le signal binaire est émis vers le (ou les, lorsqu'il existe plus d'une station répétrice) circuit récepteur 20 de la station répétrice 2, le signal binaire B et l'horloge H reconstituée au moyen d'une boucle à verrouillage de phase 201 sont transmis vers le circuit émetteur 21 qui émet les informations binaires vers les différents circuits récepteurs 30, 40, 50,..., des stations terminales 3, 4, 5,....

Ainsi la station centrale 1 émet des informations de manière omnidirectionnelle et simultanée vers l'ensemble des n stations distantes qui sélectionnent les informations qui leur sont destinées, c'est le sens de transmission qui sera appelé sens multiplex.

A l'inverse, les stations distantes ne pouvant pas toutes émettre simultanément, il leur est alloué un intervalle de temps particulier pendant lequel elles peuvent émettre leurs informations vers la station centrale, c'est la technique dite d'Accès Multiple à Répartition dans le Temps (A.M.R.T.), ce sens de transmission sera appelé sens A.M.R.T.

L'émission de chaque station distante constitue ce qui sera appelé un paquet.

Le nombre de paquets est lié au nombre de voies téléphoniques que le système peut véhiculer. Outre les voies téléphoniques un certain nombre de paquets sont prévus pour assurer la gestion du système. Par exemple, à 30 paquets utilisés pour transmettre les voies téléphoniques deux paquets peuvent être associés pour la gestion, soit un total de 32 paquets. Pour chaque paquet, le nombre d'octets relatifs aux informations à transmettre est choisi de telle façon que le temps réel d'émission soit suffisamment long relativement au temps de mise en route des circuits d'émission et de réception mais soit suffisamment court relativement à la durée de mise en paquets pour ne pas entraîner d'écho gênant lors d'une conversation. Ainsi, à une période d'émission de paquets par exemple égale à 8 ms, correspond une longueur de 64 octets d'information pure. A ces octets d'information, sont ajoutés des octets de service (par exemple 8), pour améliorer l'efficacité de la transmission, ce qui entraîne une augmentation du débit de transmission. Parmi les octets de service, un certain nombre est réservé à ce qui est appelé récupération de rythme.

Les différents paquets sont émis par les circuits émetteurs 31, 41, 51,..., les stations terminales 3, 4, 5,..., vers le (ou les, lorsqu'il existe plus d'une station répétrice) circuit récepteur 22 de la station répétrice 2, puis le circuit émetteur 23 de la station répétrice 2 émet les paquets vers le circuit récepteur 12 de la station centrale 1.

Conformément à l'invention, un dispositif pour la récupération de rythme (13,24) convenant notamment pour un système de transmission d'informations utilisant dans un sens de transmission le principe dit d'Accès Multiple à Répartition dans le Temps (A.M.R.T.), système constitué d'une station centrale (1) et de stations distantes (2,3,4,5....), chaque station disposant d'au moins un circuit émetteur (11,21,23,31,41,51,...) et un circuit récepteur (12,20,22,30,40,50,...), les informations transmises par le circuit émetteur (11) de la station centrale (1) vers les circuits récepteurs (20,30,40,50,...) des stations distantes (2,3,4,5,...) étant multiplexées temporellement et synchronisées au moyen d'une boucle à verrouillage de phase (201, décrite avec la figure 2) fournissant entre autres un signal d'horloge multiplex (H), alors que les informations émises par les circuits émetteurs (23, 31, 41, 51,...) des stations distantes (2, 3, 4, 5,...) sont transmises vers le circuit récepteur (12) de la station centrale (1) selon le principe dit d'A.M.R.T. et sont synchronisées par le dispositif de récupération de rythme (13, 24) qui comporte au moins un comparateur de phase, un diviseur de fréquence programmable, un oscillateur qui fournit un signal de référence au diviseur programmable, ledit dispositif de récupération de rythme (13, 24) étant remarquable en ce qu'il est constitué par une double boucle (décrite avec la figure 3) pour une remise en phase rapide, la première boucle comportant l'oscillateur qui est asservi au signal d'horloge multiplex H et fournissant à son tour le signal de référence à la deuxième boucle comportant entre autres le comparateur de phase et le diviseur programmable.

3

Ainsi lors de l'émission des paquets, les informations sont fournies au modulateur du circuit émetteur (23, 31, 41, 51,...) sous forme binaire + horloge, l'horloge n'étant là que pour fixer les instants d'échantillonnage.

Lors de la phase de réception par les stations (1, 2,...) les informations doivent être fournies à la sortie du démodulateur du circuit récepteur (12, 22,...) suivant le même format de binaire B' + horloge H'. Comme seul le binaire est transmis par la radio, l'horloge H' doit être reconstituée à partir des transitions du binaire démodulé, c'est la récupération de rythme.

Pour que cette opération soit effectuée correctement, elle ne peut être faite sur du binaire correspondant à de la parole car il est fort peu probable d'obtenir une transition à chaque bit transmis, les suites de 1 ou de 0 étant assez fréquentes dans un signal de parole. Pour cela à chaque début de transmission d'un paquet, des octets de rythme sont émis entraînant ainsi une transition à chaque bit transmis, la phase de récupération de rythme devant être nécessairement achevée à la fin de la réception de ces octets.

Dans le système de transmission d'informations utilisé, il a été choisi une modulation 4 états (MAQ 4 Modulation d'Amplitude en Quadrature 4 états, choix non limitatif pour l'exploitation de l'invention), ainsi sont reçus deux trames binaires de rythme moitié, seule la moitié des transitions transmises sont reçues mais elles sont reçues deux fois.

Ainsi donc, dans le "sens de transmission A.M.R.T.", par exemple 5 octets sont réservés à la récupération de rythme, soit 40 bits ou encore 2x20 transitions en sortie d'un circuit récepteur. Dans le cas d'une récupération de rythme au moyen d'une boucle à verrouillage de phase, il est utopique de considérer pouvoir obtenir à la fois une stabilité de fréquence correcte et un rattrapage de phase très rapide, c'est cette considération qui a amené la demanderesse à séparer avantageusement ces deux fonctions. Le signal d'horloge multiplex H reconstituée au moyen de la boucle à verrouillage de phase 201 dans la station répétrice 2 est utilisé par le dispositif de récupération de rythme 24 pour un calage en fréquence efficace, ce signal H étant appliqué à une entrée du dispositif 24, qui se voit appliquer sur une deuxième entrée le signal binaire (2 trains de données binaires) démodulé par le démodulateur du circuit récepteur 22, le dispositif 24 ainsi asservi en fréquence opère alors une remise en phase rapide. Il en est de même pour la station centrale 1 lorsqu'il existe plusieurs stations répétrices 2, ce qui est le cas en général, le signal d'horloge H est émis directement par la logique associée à l'unité centrale 10 vers une entrée du dispositif de récupération de rythme 13 pour un calage en fréquence efficace, alors que sur une deuxième entrée du dispositif 13 est appliqué le signal binaire (2 trains de données binaires) démodulé par le démodulateur du circuit récepteur 12, le dispositif 13 opérant alors un rattrapage de phase rapide.

Sur la figure 2 est représentée une boucle à verrouillage de phase utilisée dans le sens de transmission de la station centrale vers les stations distantes, c'est à dire dans le sens multiplex. Avec la figure 2 sera succinctement décrite la boucle à verrouillage de phase 201 (fig. 1) boucle existant, d'ailleurs dans chacun des circuits récepteurs (20, 30, 40, 50,...) des stations distantes (2, 3, 4, 5,...) pour la récupération de rythme dans le sens multiplex.

Le problème de la récupération de rythme se pose aussi bien, dans le sens A.M.R.T. que dans le sens multiplex. Cependant dans ce dernier cas, il n'y a qu'une seule station émettrice et la synchronisation s'effectue toujours sur la même phase contrairement au sens A.M.R.T. pour lequel une synchronisation doit être mise en oeuvre au début de chaque paquet. Le problème du rattrapage rapide de la phase ainsi ne se pose pas, ce qui autorise la réalisation d'une boucle à verrouillage de phase ayant suffisamment d'inertie pour assurer une bonne stabilité de fréquence, stabilité de fréquence qui sera utilisée dans le sens A.M.R.T., puisque chaque circuit récepteur A.M.R.T. (12, 22, figure 1) est associé à un circuit émetteur multiplex (11, 21, figure 1) dont le signal d'horloge multiplex H est soit celui élaboré par la logique associée à l'unité centrale 10 de la station centrale 1, soit celui reconstitué et présent à la sortie de la boucle à verrouillage de phase 201 d'un circuit récepteur 20 d'une station répétrice 2.

Le démodulateur du circuit récepteur 20 fournit à l'entrée de la boucle à verrouillage de phase 201 deux trains de données binaires $A_M$ et $B_M$ (du fait de la modulation 4 phases), de fréquence H/4. L'entrée de la boucle à verrouillage de phase 201 est constituée d'un circuit différentiateur $|d/dt|$ (valeur absolue de $d/dt$) 2010 chargé de récupérer les informations contenues dans les deux trains de données binaires $A_M$ et $B_M$ en mettant en évidence l'intégralité des transitions.

La sortie du circuit 2010 fournit les informations à la fréquence H/2 à une entrée d'un comparateur de phase 2011 dont la sortie est connectée à l'entrée d'un circuit échantillonneur bloqueur 2012. Une seconde sortie du circuit 2010 vient commander l'ouverture du circuit échantillonneur bloqueur 2012 au moyen d'un signal de commande AT généré lorsqu'il est constaté une absence de transition, le circuit échantillonneur bloqueur 2012 servant en fait à mémoriser la tension de boucle en l'absence de transition. La sortie du circuit 2012 est reliée à l'entrée d'un oscillateur commandé par la tension 2013 dont le signal de sortie est de fréquence 8H. Afin de restituer le signal d'horloge H le signal de sortie de l'oscillateur 2013 est divisé

4

par 8 au moyen d'un circuit diviseur 2014 à la sortie duquel est donc disponible ledit signal d'horloge H. Ce signal de sortie est également réinjecté vers le comparateur de phase 2011, en effet le signal d'horloge est préalablement divisé par 2 au moyen du circuit diviseur 2015 et ce signal de fréquence H/2 est appliqué à une seconde entrée du comparateur de phase 2011 pour être comparé au signal de fréquence H/2 présent sur la première entrée du comparateur de phase. Les paramètres de la boucle à verrouillage de phase 201 ainsi réalisée, sont optimisés de manière à obtenir le meilleur compromis entre la stabilité de fréquence et le temps d'acquisition nécessaire à l'obtention de celle-ci.

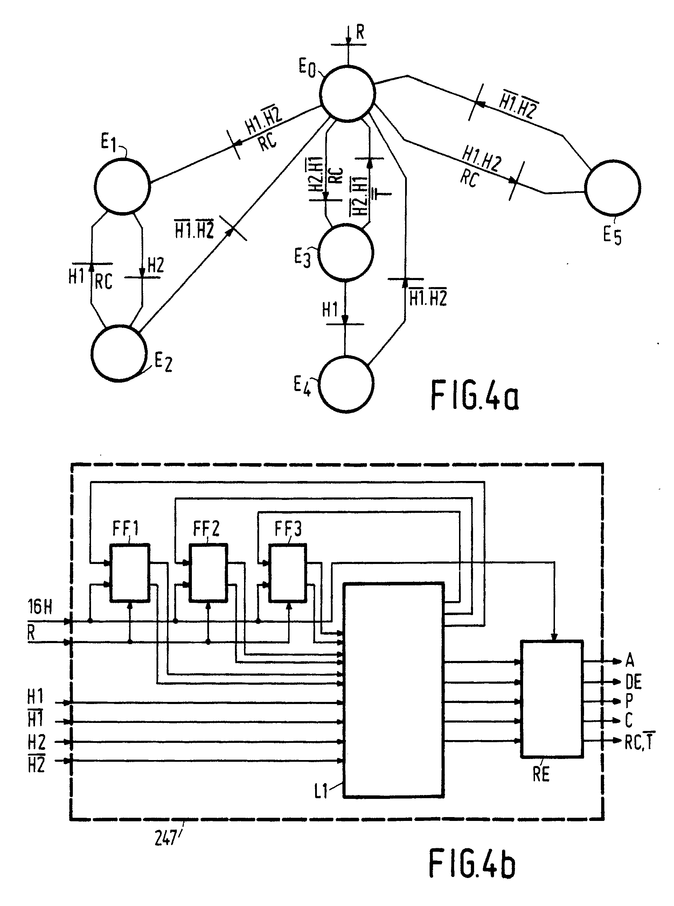

Sur la figure 3 est proposé un dispositif de récupération de rythme selon l'invention, dispositif utilisé dans le sens de transmission A.M.R.T. et qui, à la figure 1 est référencé 24 lorsqu'il se trouve dans une station répétrice 2 et 13 lorsqu'il est situé à la station centrale 1, le problème de la récupération de rythme en A.M.R.T. ne se posant qu'en station répétrice ou centrale. Sur la figure 3 le dispositif de récupération de rythme 24 apparaît constitué de deux boucles, la première boucle 24A est très semblable à la boucle à verrouillage de phase 201 décrite avec la figure 2 la différence essentielle étant qu'elle ne possède ni circuit différentiateur ni circuit échantillonneur bloqueur. Ces circuits sont dans ce cas inutiles car cette première boucle est selon l'idée de l'invention avantageusement synchronisée sur le signal d'horloge multiplex H et de ce fait toutes les transitions de l'horloge sont toujours présentes. Ainsi dans une station répétrice 2 le signal H à l'entrée du dispositif 24 est le signal d'horloge reconstitué à la sortie de la boucle à verrouillage de phase 201 (dans la station centrale 1 le signal à l'entrée du dispositif 13 est le signal d'horloge H émis directement par la logique associée à l'unité centrale). Le signal d'horloge H est donc appliqué à l'entrée de cette première boucle 24A où il est divisé par 2 au moyen d'un circuit diviseur 241. La sortie du circuit 241 est reliée à une entrée d'un comparateur de phase 242 qui voit donc le signal à la fréquence H/2. La sortie du comparateur de phase 242 est connectée à l'entrée d'un oscillateur commandé par la tension 243 à la sortie duquel le signal est à la fréquence 8H. Le signal de sortie de l'oscillateur 243 est ensuite divisé par 16 au moyen d'un circuit diviseur 244 dont la sortie est rebouclée sur une deuxième entrée du comparateur de phase 242 pour comparer ce signal de fréquence H/2 au signal de fréquence H/2 présent sur la première entrée du comparateur 242. Ainsi est réalisé un calage en fréquence optimum. C'est le signal de sortie de l'oscillateur 243 élaboré dans la première boucle 24A et calé avec précision en fréquence qui est utilisé par la seconde boucle 24B pour un rattrapage de phase rapide. Ce signal de fréquence 8H est multiplié par 2 (soit 16H) au moyen d'un circuit multiplicateur 245, ce qui autorise une correction au 1/32 de bit près (défini par rapport à H/2). La précision requise pour permettre au système fonctionnant selon le principe de l'A.M.R.T. de régler le retard des stations étant au 1/8 de bit près (par rapport à H/2), on remarquera qu'avantageusement la précision relative au réglage de la phase est ainsi quatre fois meilleure. La récupération de rythme dans le sens A.M.R.T. se réduit donc à une remise en phase rapide du signal local sur les données reçues. Le démodulateur du circuit récepteur 22 fournit à l'entrée de la deuxième boucle 24B deux trains de données binaires $A_A$ et $B_A$ (du fait de la modulation 4 phases) de fréquence H/4. L'entrée de la deuxième boucle est constituée d'un circuit différentiateur |d/dt| (valeur absolue de d/dt) 246 chargé de récupérer les informations contenues dans les deux trains de données binaires $A_A$ et $B_A$ en mettant en évidence les transitions du signal présenté à cette entrée. Les informations sortant du circuit 246 sont transmises, à la fréquence H/2, vers une première entrée d'un comparateur de phase 247 dont la seconde entrée se voit appliquer un signal de fréquence H/2 qui est comparé au signal présent sur la première entrée du circuit 247. Ce signal de comparaison appliqué sur la seconde entrée dudit circuit 247 est émis par un diviseur programmable 248 opérant une division par 30, 31, 32, 33 ou 34. Le diviseur programmable reçoit sur une de ses entrées le signal de référence calé sur la fréquence 16H présent à la sortie du circuit multiplicateur 245 assurant la liaison entre la première et la seconde boucle. Le signal de fréquence 16H est aussi transmis vers le comparateur de phase 247 pour servir d'horloge de séquencement. Le diviseur programmable 248 effectue une division du signal de fréquence 16H par 32 lorsque les phases des signaux de fréquence H/2 à l'entrée du comparateur de phase sont identiques, il effectue une division par 30 ou 31 lorsque le signal de fréquence 16H divisé est en retard de phase relativement à la phase du signal A.M.R.T. sortant du circuit 246 et donc pour rattraper l'avance de phase du signal A.M.R.T., enfin il effectue une division par 33 ou 34 lorsque le signal de fréquence 16H divisé est en avance de phase relativement à la phase du signal A.M.R.T. présent à la sortie du circuit 246 et donc pour rattraper un retard de phase du signal A.M.R.T. Ainsi la phase est toujours rattrapée relativement au signal A.M.R.T. selon un processus qui est exposé dans la suite de la description (fig.4a) et conformément à l'information de sortie du comparateur de phase 247 signalant l'avance, le retard ou l'égalité de la phase. Il est bien évident que le dispositif de récupération de rythme 13 de la station centrale 1 est en totale identité avec le dispositif 24 décrit ici.

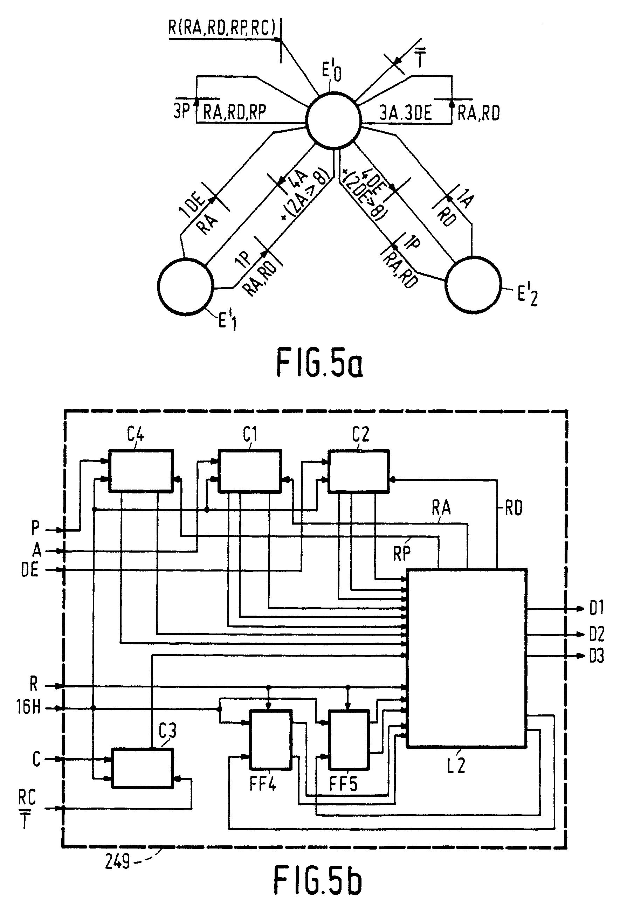

Conformément à l'idée de l'invention le dispositif de récupération de rythme dont la deuxième boucle comporte entre autres un diviseur programmable est remarquable en ce que ledit diviseur programmable est précédé d'un filtre numérique séquentiel. En effet l'information de retard, d'avance ou d'égalité de phase fournie par le comparateur de phase 247 au diviseur programmable 248 est trop grossière pour être directement utilisée comme commande d'ordre de division, c'est pour cette raison que ces informations sont moyennées par l'intermédiaire d'un filtre numérique séquentiel 249 qui interprète lesdites informations issues du comparateur de phase selon un processus décrit dans la suite (fig.5b). Le filtre numérique séquentiel reçoit d'autre part le signal de fréquence 16H qui lui sert d'horloge de séquencement.

Ainsi la sortie du comparateur de phase 247 est connectée à l'entrée du filtre numérique séquentiel 249 qui fournit à sa sortie une commande d'ordre de division qui est appliquée à une entrée du diviseur programmable 248. Le diviseur programmable 248 ainsi bouclé génère alors à sa sortie connectée à une entrée du circuit récepteur 22, l'horloge H' de rythme A.M.R.T. nécessaire à la lecture des paquets provenant d'une même station distante, puis se recale selon le même processus pour lire les paquets émis par une autre station distante et ainsi de suite. L'horloge H' est identique à l'horloge H en ce qui concerne la fréquence mais est calée en phase relativement au signal de données d'entrée.

Le diviseur programmable 248 par 30, 31, 32, 33 ou 34 est par exemple un compteur 8 bits, élaboré à partir de deux compteurs 4 bits montés en cascade, rebouclé aux positions décimales respectives de 226, 225, 224, 223, 222 selon le tableau suivant :

| Valeur du compteur | Bit8 (128) | Bit7 (64) | Bit6 (32) | Bit5 (16) | Bit4 (8) | Bit3 (4) | Bit2 (2) | Bit1 (1) |
|---|---|---|---|---|---|---|---|---|
| 222 | 1 | 1 | 0 | 1 | 1 | 1 | 1 | 0 |
| 223 | 1 | 1 | 0 | 1 | 1 | 1 | 1 | 1 |
| 224 | 1 | 1 | 1 | 0 | 0 | 0 | 0 | 0 |
| 225 | 1 | 1 | 1 | 0 | 0 | 0 | 0 | 1 |
| 226 | 1 | 1 | 1 | 0 | 0 | 0 | 1 | 0 |
| 227 | 1 | 1 | 1 | 0 | 0 | 0 | 1 | 1 |
| 228 | 1 | 1 | 1 | 0 | 0 | 1 | 0 | 0 |
| 229 | 1 | 1 | 1 | 0 | 0 | 1 | 0 | 1 |
| 230 | 1 | 1 | 1 | 0 | 0 | 1 | 1 | 0 |
| 231 | 1 | 1 | 1 | 0 | 0 | 1 | 1 | 1 |
| 232 | 1 | 1 | 1 | 0 | 1 | 0 | 0 | 0 |
| 233 | 1 | 1 | 1 | 0 | 1 | 0 | 0 | 1 |
| 234 | 1 | 1 | 1 | 0 | 1 | 0 | 1 | 0 |
| 235 | 1 | 1 | 1 | 0 | 1 | 0 | 1 | 1 |
| 236 | 1 | 1 | 1 | 0 | 1 | 1 | 0 | 0 |
| 237 | 1 | 1 | 1 | 0 | 1 | 1 | 0 | 1 |
| 238 | 1 | 1 | 1 | 0 | 1 | 1 | 1 | 0 |
| 239 | 1 | 1 | 1 | 0 | 1 | 1 | 1 | 1 |
| 240 | 1 | 1 | 1 | 1 | 0 | 0 | 0 | 0 |
| 241 | 1 | 1 | 1 | 1 | 0 | 0 | 0 | 1 |
| 242 | 1 | 1 | 1 | 1 | 0 | 0 | 1 | 0 |
| 243 | 1 | 1 | 1 | 1 | 0 | 0 | 1 | 1 |
| 244 | 1 | 1 | 1 | 1 | 0 | 1 | 0 | 0 |
| 245 | 1 | 1 | 1 | 1 | 0 | 1 | 0 | 1 |
| 246 | 1 | 1 | 1 | 1 | 0 | 1 | 1 | 0 |
| 247 | 1 | 1 | 1 | 1 | 0 | 1 | 1 | 1 |
| 248 | 1 | 1 | 1 | 1 | 1 | 0 | 0 | 0 |
| 249 | 1 | 1 | 1 | 1 | 1 | 0 | 0 | 1 |
| 250 | 1 | 1 | 1 | 1 | 1 | 0 | 1 | 0 |
| 251 | 1 | 1 | 1 | 1 | 1 | 0 | 1 | 1 |
| 252 | 1 | 1 | 1 | 1 | 1 | 1 | 0 | 0 |
| 253 | 1 | 1 | 1 | 1 | 1 | 1 | 0 | 1 |
| 254 | 1 | 1 | 1 | 1 | 1 | 1 | 1 | 0 |
| 255 | 1 | 1 | 1 | 1 | 1 | 1 | 1 | 1 |

Dans ces conditions, suivant le tableau qui précède, 255 étant la valeur du compteur à l'instant de préchargement:
- à la valeur du compteur 226 correspond une division par 30.
- à la valeur du compteur 225 correspond une division par 31.
- à la valeur du compteur 224 correspond une division par 32.
- à la valeur du compteur 223 correspond une division par 33.
- à la valeur du compteur 222 correspond une division par 34.

En considérant le tableau précédent pour les valeurs du compteur 222, 223, 224, 225, 226, on remarque que les bits 7 et 8 toujours à l'état 1, à ces deux entrées, qui sont réunies, est donc appliqué en permanence un niveau haut. On remarque d'autre part que les bits 5 et 6 sont toujours complémentaires et que le bit 5 est toujours dans le même état que les bits 3 et 4, ainsi les entrées correspondant aux bits 3, 4, 5 sont connectées entre elles et l'entrée correspondant au bit 5 est d'autre part reliée à l'entrée correspondant au bit 6 au travers d'un circuit inverseur. Les entrées correspondant aux bits 1, 2 et 3 sont chacune réunies à une sortie de commande d'ordre de division du filtre numérique séquentiel 249. Ainsi, lorsque aux entrées correspondant respectivement aux bits 1, 2 et 3 est appliquée:
- la valeur binaire 011, il correspond un ordre de division par 34.
- la valeur binaire 111, il correspond un ordre de division par 33.
- la valeur binaire 000, il correspond un ordre de division par 32.
- la valeur binaire 100, il correspond un ordre de division par 31.
- la valeur binaire 010, il correspond un ordre de division par 30.

L'horloge d'entrée du diviseur programmable 248 ainsi obtenu étant le signal de fréquence 16 H présent à la sortie du circuit multiplicateur 245, à la sortie de rang 4 (bit 4) est alors disponible le signal de fréquence H transmis vers le circuit récepteur 22 (fig. 1), et à la sortie de rang 5 (Bit 5) est présent le signal d'horloge de remise en phase H/2 qui est appliqué à la deuxième entrée du comparateur de phase 247.

La figure 4a représente un diagramme d'états relatif au comparateur de phase utilisé dans la deuxième boucle 24B, la figure 4b montre un schéma simplifié de ce comparateur de phase 247. Le comparateur 247 est un comparateur de phase numérique qui est constitué en fait par un automate séquentiel. L'horloge de séquencement est le signal de fréquence 16 H et aux entrées de l'automate sont appliquées les impulsions provenant d'une part de la détection des transitions sur les données reçues réalisée par le circuit différentiateur 246 et d'autre part du signal d'horloge de remise en phase de la sortie de rang 5 du diviseur programmable 248.

Les sorties véhiculent les impulsions relatives à l'une des trois informations possibles : Avance, retard ou égalité de phase suivant la séquence lue sur les entrées et conformément au diagramme d'états décrit ci-dessous.

Pour une meilleure appréhension de la description qui suit, le signal d'impulsions correspondant aux données reçues issu du circuit différentiateur 246 est appelé H1 ou $\overline{H1}$ (selon son état haut ou bas respectivement) et sa durée est égale à une période d'horloge de séquencement, le signal d'horloge de remise en phase issu du diviseur 248 est appelé H2 ou $\overline{H2}$ (selon son état haut ou bas respectivement). Les signaux H1, $\overline{H1}$, H2 et $\overline{H2}$ sont les variables d'entrée.

Sur le diagramme de la figure 4a, 6 états peuvent être définis au moyen par exemple de 3 bascules de type D (FF1, FF2, FF3) alimentées au rythme du signal de fréquence 16 H. L'état Eo étant l'état de départ (lors de la mise sous tension ou lors d'un retour de cycle), si l'information disponible est H1$\overline{H2}$ l'étape suivante est l'état E1 décodé grâce à une logique de décodage (bloc L1) constituée par exemple d'une batterie de circuits logiques aux entrées desquels sont transmis les variables d'entrée et les états de sortie des 3 bascules D. Les états de sortie des bascules D sont aussi transmis par l'intermédiaire du bloc logique L1 vers un registre RE qui communique les informations utiles au filtre numérique séquentiel, informations telles que Retard DE, Avance A, égalité de Phase P, positionnement C, remise à zéro RC d'un compteur d'impulsions présent à une entrée du filtre numérique séquentiel et $\overline{T}$ qui signale l'absence du signal H1. A la mise sous tension ou en début de cycle les bascules sont remises à zéro (signal R, qui est un top de synchro).

Ainsi lorsqu'à l'état Eo l'information H1$\overline{H2}$ a été décodée, simultanément est positionnée pendant une période d'horloge de séquencement la remise à zéro RC du registre de sortie du comparateur de phase, pour opérer une remise à zéro du compteur d'impulsions à l'entrée du filtre numérique séquentiel. L'information H1$\overline{H2}$ signifiant que l'horloge H1 des données reçues est en avance sur l'horloge H2, la sortie C du registre RE du comparateur est positionnée de telle manière que le compteur d'impulsions puisse compter les périodes d'horloge de séquencement (16 H) jusqu'à ce que l'horloge H2 monté à son tour : c'est l'état E2 pendant lequel est aussi positionnée la sortie Avance connectée au filtre numérique séquentiel à un compteur comptant les informations du type Avance. Lors de la retombée du signal H2, si le signal H1 est à l'état bas, le comparateur de phase repasse à l'état Eo.

Cependant, lorsque le signal H2 passe à l'état bas si le signal H1 est encore à l'état haut, il est constaté une double transition, une remise à zéro du compteur d'impulsions est alors provoquée et il y a retour à l'état E1 suivi d'un passage à l'état E2 lorsque l'horloge H2 est repassée à l'état haut, le cycle redevenant identique à celui décrit précédemment lorsque l'horloge H1 passe à l'état bas avant l'horloge H2.

Le même processus est observé si l'information H1$\overline{H2}$ réapparaît.

Si à l'état Eo, c'est l'information H2$\overline{H1}$ qui est décodée, alors et simultanément est positionnée la remise à zéro RC du registre de sortie RE du comparateur de phase pour opérer une remise à zéro du compteur d'impulsions à l'entrée du filtre numérique séquentiel. La sortie C du registre RE du comparateur de phase est positionnée pour que le compteur d'impulsions compte au rythme du signal de fréquence 16 H c'est l'état E3; si l'horloge H2 tombe avant que l'horloge H1 ne monte, le compteur s'arrête de compter et il est constaté une absence de transition H1($\overline{T}$), information transmise vers le compteur d'impulsions du filtre numérique séquentiel et il y a retour à l'état Eo. Si par contre l'horloge H1 monte avant que l'horloge H2 ne descende, l'information d'entrée H2$\overline{H1}$ signifie alors que l'horloge H1 est en retard sur l'horloge H2 et le compteur d'impulsions commandé par la sortie C du registre RE s'arrête de compter à l'instant de montée de ladite horloge H1, c'est l'état E4 pendant lequel est positionnée la sortie Retard connectée au filtre numérique séquentiel à un compteur comptant les informations de type Retard. Lors de la retombée du signal H1 le comparateur de phase repasse à l'état Eo. Le même cycle est reproduit tant que l'information H2$\overline{H1}$ réapparaît.

Enfin si à l'état Eo, c'est l'information H1H2 qui est décodée, en même temps est positionnée la remise à zéro RC du registre de sortie RE du comparateur de phase pour opérer la remise à zéro du compteur d'impulsions à l'entrée du filtre numérique séquentiel. L'information d'entrée signifie dans ce cas que les horloges H1 et H2 qui passent à l'état haut en même temps sont en Phase, c'est l'état E5, la sortie égalité de Phase est positionnée, cette sortie est reliée au filtre numérique séquentiel à un compteur comptant les informations de type en Phase. Lors de la retombée des horloges H1 et H2 le comparateur de phase repasse à l'état Eo. Ce cycle est reproduit tant que l'information H1H2 réapparaît.

Ainsi le comparateur de phase numérique précède le filtre numérique séquentiel et fournit à celui-ci des informations de type Avance, Retard, égalité de Phase. Il permet aussi d'exécuter des remises à zéro du compteur d'impulsions du filtre numérique séquentiel. Il transmet d'autre part une information compteur au dit compteur d'impulsions permettant ainsi de déterminer le décalage existant entre les fronts des deux horloges H1 et H2, cette information servant à définir les divisions soit par 30 ou 31 dans le cas d'une transmission simultanée d'informations de type Avance, soit par 33 ou 34 dans le cas d'une transmission simultanée d'informations de type Retard. La division par 32 étant effectuée lorsque sont transmises des informations de type égalité de Phase. Le comparateur de phase numérique permet enfin, quand il est constaté une absence de transition (passage de l'état E3 à l'état Eo), de repositionner au moyen de cette information le diviseur programmable en diviseur par 32.

La figure 5a représente un diagramme d'états relatif au filtre numérique séquentiel 249 placé avantageusement entre le comparateur de phase numérique 247 et le diviseur programmable 248. La figure 5b montre un schéma simplifié du filtre numérique séquentiel. Le filtre numérique séquentiel est lui aussi constitué par un automate séquentiel dont l'horloge de séquencement est également le signal de fréquence 16 H. Les entrées de cet automate reçoivent les informations issues soit directement, soit indirectement du comparateur de phase numérique 247. Les informations utilisées directement sont l'information égalité de Phase P et l'information absence de transition $\overline{T}$, celles utilisées indirectement sont les informations de type Avance A, Retard DE et l'information compteur C. Les trois derniers types d'informations sont exploités après passage respectivement par un compteur d'informations de type Avance C1, un compteur d'informations de type Retard C2 et un compteur d'impulsions C3 dont il a été parlé lors de la description de la figure 4. Le comptage des informations de type égalité de Phase P est effectué par un compteur d'informations de type égalité de Phase C4.

Le filtre numérique séquentiel va interpréter les informations issues du comparateur de phase selon les critères suivants.

Lorsque 4 impulsions de type Avance sont comptées ou simultanément 2 impulsions de type Avance et un écart supérieur à 8 bits, il y a ordre de division par 30 si l'écart constaté est supérieur ou égal à 8 bits ou ordre de division par 31 si l'écart constaté est strictement inférieur à 8 bits et ceci tant qu'il est reçu des informations de type Avance. Dès qu'il est reçu 1 information de type Retard ou 1 information d'égalité de Phase le diviseur programmable est repositionné en division par 32.

Lorsque 4 impulsions de type Retard sont comptées, ou simultanément 2 impulsions de type Retard et un écart supérieur à 8 bits, il est donné un ordre de division par 34 si l'écart constaté est supérieur ou égal à 8 bits, ou un ordre de division par 33 si l'écart constaté est strictement inférieur à 8 bits et ceci tant qu'il est reçu des informations de type Retard. Dès qu'il est compté 1 information de type Avance ou 1 information d'égalité de Phase le diviseur programmable est repositionné en division par 32.

Lorsque 6 impulsions sont comptées et qu'elles sont sans prédominance de type Avance ou Retard (c'est à dire 3 impulsions de type Avance et 3 impulsions de type Retard) la séquence est réinitialisée et il est donné un ordre de division par 32.

Enfin lorsqu'une impulsion de type égalité de Phase est reçue, il est donné un ordre de division par 32. Après réception de 3 impulsions de ce type les compteurs d'informations de type Avance, Retard ou égalité de Phase sont remis à zéro.

Ainsi utilisé le filtre numérique séquentiel permet de rattraper avantageusement et rapidement un écart de phase important, par exemple 16 bits d'écart lors de la réception de 16 informations de type Avance ou de type Retard c'est à dire 32 bits de rythme sur les 40 disponibles (2x20 transitions) il reste ainsi 8 bits soit 2x4 transitions pour parfaire si nécessaire le réglage de phase. Ce filtre apporte simultanément un filtrage efficace en moyennant les informations de sortie du comparateur de phase numérique, informations trop grossières pour être exploités directement comme ordre de division par le diviseur programmable.

Le diagramme d'états de la figure 5a représente 3 états E'o, E'1, E'2 correspondant aux ordres de division respectivement par 32, par 30 ou 31, par 33 ou 34. Ces 3 états sont définis par exemple au moyen de deux bascules de type D (FF4, FF5) alimentées au rythme du signal de fréquence 16 H. Ce signal de fréquence 16 H est aussi l'horloge des compteurs Avance C1, Retard C2, égalité de Phase C4, et du compteur d'impulsions C3. Les états sont décodés au moyen d'une logique de décodage (bloc L2) constituée par exemple d'une batterie de circuits logiques aux entrées desquels sont transmis les états de sortie des 3 compteurs Avance, Retard, égalité de Phase et les états de sortie des 2 bascules D. La logique de décodage L2 permet aussi la remise à zéro des 3 compteurs Avance (signal RA), retard (signal RD) égalité de Phase (signal RP), enfin c'est au moyen de 3 de ses sorties que sont donnés les ordres de division D1, D2, D3 au diviseur programmable. Le compteur d'impulsions C3 permet de déterminer si le déphasage est supérieur ou égal à 8 bits et donne ainsi une information nécessaire pour ordonner la division soit par 30 si simultanément le compteur Avance C1 a compté au moins 2 impulsions, soit par 34 si simultanément le compteur Retard C2 a compté au moins 2 impulsions.

A la mise sous tension, les 2 bascules D (FF4, FF5) sont remises à zéro (signal R qui est un top de synchro), les 4 compteurs C1, C2, C3, C4 sont de même remis à zéro (signaux RA, RD, RP par l'intermédiaire de la logique L2 et signal RC). A la mise sous tension correspond donc une division par 32. Chaque information d'absence de transition $\bar{T}$ impose une division par 32 sans remise à zéro des compteurs C1, C2, C4. L'ordre de division par 32 est représenté par l'état E'o, cet état E'o est conservé si après réception de 6 impulsions successives 3 ont été comptées par le compteur Avance (3A) et 3 par le compteur Retard (3D) ou inversement. A la fin du comptage de ces 6 impulsions est effectuée une remise à zéro du compteur Avance (RA) et du compteur Retard (RD).

Lorsque 4 impulsions de type Avance (4A) sont comptées par le compteur Avance C1 ou lorsque 2 impulsions de type Avance sont comptées et qu'il existe un écart supérieur à 8 bits (2A.> 8), il y a passage à l'état E'1 c'est à dire ordre de division par 30 si le compteur d'impulsions C3 a enregistré un décalage supérieur ou égal à 8 bits ou bien ordre de division par 31 si le décalage est inférieur à 8 bits. A l'état E'1 si 1 égalité de phase (1P) est constatée par le compteur d'égalité de Phase C4, il y a retour à l'état E'o (division par 32) et simultanément sont remis à zéro le compteur Avance (RA) et le compteur Retard (RD). Si de même, à l'état E'1, 1 information de type retard (1D) est comptée par le compteur Retard C2, il y a retour à l'état E'o (division par 32) et simultanément le compteur Avance est remis à zéro (RA).

Inversement lorsque 4 impulsions de type Retard (4D) sont comptées par le compteur Retard C2 ou lorsque 2 impulsions de type Retard sont comptées et qu'il existe un écart supérieur à 8 bits (2DE.> 8), il y a passage à l'état E'2 c'est à dire ordre de division par 34 si le compteur d'impulsions C3 a enregistré un décalage supérieur ou égal à 8 bits ou bien ordre de division par 33 si le décalage est inférieur à 8 bits. A l'état E'2 si 1 égalité de Phase (1P) est constatée par le compteur d'égalité de Phase C4, il y a retour à l'état E'o (division par 32) et simultanément sont remis à zéro le compteur Avance (RA) et le compteur retard (RD). Si à ce même état E'2, 1 information de type Avance (1A) est comptée par le compteur Avance C1, il y a retour à l'état E'o (division par 32) et simultanément le compteur Retard est remis à zéro (RD).

Enfin, à l'état E'o (division par 32) lorsque 3 impulsions successives sont comptées par le compteur d'égalité de Phase C4 (3P), il y a à l'évidence maintien de cet état (donc division par 32), mais de plus les compteurs Avance, Retard et égalité de Phase sont remis à zéro respectivement par les signaux RA, RD, RP.

Ainsi donc, le filtre numérique séquentiel fournit, au moyen de 3 de ses sorties D1, D2, D3 respectivement, les ordres de division à 3 des entrées du diviseur programmable correspondant aux bits 1, 2 et 3 selon le codage rappelé ci-dessous.

- valeur binaire 011 correspondant à un ordre de division par 34.
- valeur binaire 111 correspondant à un ordre de division par 33.
- valeur binaire 000 correspondant à un ordre de division par 32.
- valeur binaire 100 correspondant à un ordre de division par 31.
- valeur binaire 010 correspondant à un ordre de division par 30.

## Revendications

1. Dispositif (13,24) pour la récupération de rythme convenant notamment pour un système de transmission d'informations utilisant dans un sens de transmission le principe dit d'Accès Multiple à Répartition dans le Temps (A.M.R.T.) système constitué d'une station centrale (1) et de stations distantes (2,3,4..) chaque station disposant d'au moins un circuit émetteur et un circuit récepteur, les informations transmises par le circuit émetteur (11) de la station centrale vers les circuits récepteurs (20,30,40..) des stations distantes étant multiplexées temporellement et synchronisées au moyen d'une boucle à verrouillage de phase (201) fournissant entre autres un signal d'horloge multiplex (H), alors que les informations émises par les circuits émetteurs (31,41..) des stations distantes sont transmises vers le circuit récepteur (12) de la station centrale selon le principe dit d'A.M.R.T. et sont synchronisées par le dispositif de récupération de rythme (13,24) qui comporte au moins un comparateur de phase, un diviseur de fréquence programmable, un oscillateur qui fournit un signal de référence au diviseur programmable, ledit dispositif de récupération de rythme étant caractérisé en ce qu'il est constitué par une double boucle (24A,24B) pour une remise en phase rapide, la première boucle (24A) permettant de réaliser un calage en fréquence ets comportant l'oscillateur (243) qui est asservi au signal d'horloge multiplex (H) et fournissant à son tour le signal de référence à la deuxième boucle (24B) assurant une remise en phase du signal local sur les données reçues et comportant entre autres le comparateur de phase (247) et le diviseur programmable (248).

2. Dispositif pour la récupération de rythme selon la revendication 1 caractérisé en ce que dans la deuxième boucle (24B) le diviseur programmable (248) est précédé d'un filtre numérique séquentiel (249) pour moyenner l'information d'entrée du diviseur programmable (248).

3. Dispositif pour la récupération de rythme selon l'une des revendications 1 à 2 caractérisé en ce que la fréquence du signal de référence fourni par l'oscillateur asservi est un multiple de la fréquence du signal d'horloge multiplex.

## Claims

1. Clock recovery arrangement (13, 24) suitable especially for an information transmission system using the time-division multiple-access (TDMA) principle in one transmission direction, the system being constituted by a central station (1) and remote stations (2, 3, 4...), each station having at least one transmitter circuit and one receiver circuit, information sent by the transmitter circuit (11) of the central station to the receiver circuits (20, 30, 40...) of the remote stations being time-division multiplexed and synchronised by means of a phase-locked loop (201) producing at least a multiplex clock signal (H) , whilst information sent by the transmitter circuits (31, 41,...) of the remote stations is transmitted to the receiver circuit (12) of the central station in accordance with said TDMA principle and is synchronized by the clock recovery arrangement (13, 24) which includes at least a phase comparator, a programmable frequency divider an oscillator applying a reference signal to the programmable frequency divider, said clock recovery arrangement being characterized in that it is constituted by a dual loop (24A, 24B) for a fast phase reset, the first loop (24A) which renders it possible to realize a frequency setting and includes said oscillator (243) which is locked onto said multiplex clock signal (H) and which applies in its turn said reference signal to the second loop (24B) which ensures a phase reset of the local signal to the received data and which includes inter alia the phase comparator (247) and the programmable frequency divider (248)

2. Clock recovery arrangements as claimed in Claim 1, characterized in that said programmable frequency divider (248) in the second loop (24B) is preceded by a sequential digital filter (249) to average the input information of said programmable frequency divider (248).

3. Clock recovery arrangement as claimed in one of the Claims 1 or 2, characterized in that the frequency of said reference signal produced by said controlled oscillator is a multiple of the frequency of said multiplex clock signal.


## Ansprüche

1. Schaltungsanordnung (13, 24) zur Taktwiedergewinnung insbesondere für ein Datenübertragungssystem, wobei in einer Übertragungsrichtung das Zeitmultiplexprinzip mit Vielfachzugriff (TDMA) angewandt wird, wobei dieses System aus einer Zentralstation (1) und Fernstationen (2,3,4...) besteht, wobei jede Station mindestens einen Sender- und einen Empfangskreis aufweist, wobei die durch den Senderkreis (11) von der Zentralstation zu den Empfangskreisen (20,30,40...) der Fernstationen übertragenen Daten zeitverschachtelt und mittels einer Phasenverriegelungsschleife (201) synchronisiert sind, wobei diese Schleife u.a. ein Multiplex-Taktsignal (H) liefert, wenn die durch die Senderkreise (31, 41,...) der Fernstationen ausgesendeten Daten über den Empfangskreis (12) der Zentralstelle nach dem TDMA-Prinzip übertragen und durch die Taktwiedergewinnungsschaltung (13,24) synchronisiert werden, die mindestens einen Phasenvergleicher, einen programmierbaren Frequenzteiler und einen Oszillator aufweist, der dem programmierbaren Teiler ein Bezugssignal liefert, wobei die Taktwiedergewinnungsschaltung dadurch gekennzeichnet ist, daß sie durch eine doppelte Schleifenschaltung (24A, 24B) für eine schnelle Phasenwiederherstellung gebildet ist, wobei die erste Schleife (24A) eine Frequenzverriegelung herbeiführt und einen auf das Multiplex-Taktsignal (H) verriegelten Oszillator (243) aufweist und seinerseits der zweiten Schleife (24B) das Bezugssignal liefert, wobei diese zweite Schleife eine Phasensynchronisierung des Ortssignals zu den empfangenen Daten gewährleistet und u.a. den Phasenvergleicher (247) sowie den programmierbaren Teiler (248) aufweist.

2. Schaltungsanordnung zur Taktwiedergewinnung nach Anspruch 1, dadurch gekennzeichnet, daß in der zweiten Schleife (24B) vor dem programmierbaren Teiler (248) ein sequentielles Digitalfilter (249) zum Mitteln der Eingangsdaten des programmierbaren Teilers (248) vorgesehen ist.

3. Schaltungsanordnung zur Taktwiedergewinnung nach einem der vorstehenden Ansprüche 1 und 2, dadurch gekennzeichnet, daß die Frequenz des von dem gesteuerten Oszillator gelieferten Bezugssignals ein Vielfaches der Frequenz des Multiplex-Taktsignals ist.

FIG.1

FIG.2

FIG.3

FIG.4a

FIG.4b

FIG.5a

FIG.5b